# EUROPEAN PATENT SPECIFICATION

(11) **EP 3 244 316 B1**
(45) Date of publication and mention of the grant of the patent: **09.01.2019**
(21) Application number: 17169663.6
(22) Date of filing: 05.05.2017
(51) Int. Cl.: G06F 11/14, G06F 11/10

(54) **METHOD AND APPARATUS FOR PERFORMING DATA RECOVERY IN REDUNDANT STORAGE SYSTEM**
VERFAHREN UND VORRICHTUNG ZUR DURCHFÜHRUNG VON DATENWIEDERHERSTELLUNG IN EINEM SPEICHERSYSTEM
PROCÉDÉ ET APPAREIL PERMETTANT D'EFFECTUER UNE RÉCUPÉRATION DE DONNÉES DANS UN SYSTÈME DE MÉMOIRE REDONDANT

(30) Priority: 13.05.2016 TW 105114847; 03.01.2017 US 201762441561 P; 20.04.2017 US 201715491994
(43) Date of publication of application: 15.11.2017
(73) Proprietor: Synology Incorporated, Taipei 103 (TW)
(72) Inventor: Lien, Huai-En, 103 Taipei (TW); Cheng, Chung-Chiang, 103 Taipei (TW); Yeh, Chien-Kuan, 103 Taipei (TW); Liang, Chih-Cheng, 103 Taipei (TW); Chang, Tzu-Lin, 103 Taipei (TW); Chien, Ning-Yen, 103 Taipei (TW); Chen, Hsuan-Ting, 103 Taipei (TW)
(74) Representative: Becker Kurig Straus

(56) References cited:
- US-A1- 2003 041 211
- US-A1- 2010 211 731
- US-A1- 2014 281 697

## Description

This application is a continuation-in-part application and claims the benefit of U.S. Non-provisional Application No. 15/381,118, which was filed on December 16, 2016. In addition, this application claims the benefit of U.S. Provisional Application No. 62/441,561, which was filed on January 3,2017.

The present invention relates to performance management for a data storage system, and more particularly, to a method and an apparatus for performing data recovery in a redundant storage system.

A redundant storage system with redundant storage ability such as a Redundant Array of Independent Disks (RAID) may combine a plurality of storage devices as a storage pool, and dispatch the redundant data into the different storage devices, in which the redundant data may help with data recovery when a single device is malfunctioning. However when bit rot or silent data corruption occurs, the conventional storage system lacks an efficient mechanism to solve these problems. For example, in a situation where the RAID level of the conventional RAID is RAID 5, in order to check if the data of a data chunk A1 of one of the plurality of storage devices is correct, the corresponding data chunks A2, A3 and the parity chunk Ap are read from other storage devices for comparison (in particular, by comparing the original data of the data chunk A1 and the calculated data which is calculated according to the data chunks A2, A3 and the parity chunk Ap). This may greatly degrade the performance of randomly reading data. In addition, even when the comparison determines that the original data and the calculated data are different, the conventional RAID is not able to check which data is correct. In another example, in a situation where the RAID level of the conventional RAID is RAID 1, twice as much time will be taken to check if bit rot occurs.

US Patent Application No. 2003/041211 teaches a dual axis RAID system, which can reduce the risk of failure by having multiple rings and dual planes of fault tolerance. If one array is lost, it can be rebuilt dynamically using the other plane. The RAID system has X planes and Y planes, wherein both planes have parity check disks and can regenerate blocks in several directions, by means of mirroring, striping and parity checking.

US Patent Application No. 2014/281697 co-ordinates data recovery in a RAID system so that any layer can handle a transient or permanent data loss at any other layer. Data recovery occurs through a hierarchy of layers. A higher layer will be requested to determine a recovery mechanism. If reconstruction is unsuccessful, a help response will be issued to another layer. Every layer above the disk layer will be asked before propagating the error back to the original request. Once the recovery succeeds, a success code will be returned.

US Patent Application No. 2010/211731 uses an SSD as a read cache to improve memory performance. The system comprises a host, a RAID controller comprising a cache manager and a DRAM cache, and mass storage comprising an SSD storage serving as a random read (RR) cache and an HDD storage. If a read, request is in the DRAM cache it will be served from the DRAM; if not, it will be checked if the data is in the SSD cache, and served from the SSD cache. If the data is not in the SSD cache, the data will be served from the HDD storage, and tracking logic will be invoked to load the data to the SSD when it is determined to be RR data.

Although the related arts provide some methods to solve these problems, other undesirable side effects may occur as a result. Therefore, a novel method and associated architecture arc required.

This in mind, the application aims at providing a method and associated apparatus for performing data recovery in a redundant storage system, in order to solve the problems mentioned above.

This is achieved by a method of claim 1 and an associated apparatus according to claim 11. The dependent claims pertain to corresponding further developments and improvements.

As will be seen more clearly from the detailed description following below, the claimed method is arranged for performing data recovery in a redundant storage system is disclosed, in which the redundant storage system includes a plurality of storage devices. The method includes: determining a state of a cache block of a plurality of cache blocks, in which the plurality of storage devices includes a set of Hard Disk Drives (HDDs) and a set of Solid State Drives (SSDs), an SSD Redundant Array of Independent Disk (RAID) of the redundant storage system includes the set of SSDs, and an HDD RAID of the redundant storage system includes the set of HDDs, in which the SSD RAID is utilized as a cache system of the HDD RAID and includes the plurality of cache blocks; and performing a retry-read operation on at least one of the HDD RAID and the SSD RAID according to the state of the cache block, to obtain a correct version of data within the redundant storage system.

In addition, the claimed apparatus includes at least one portion (e.g. a portion or all) of the redundant storage system. The apparatus may include: a control circuit located in a specific layer of a plurality of layers in the redundant storage system and coupled to a plurality of storage devices of the redundant storage system, in which the control circuit is arranged to control an operation of the redundant storage system. The step of controlling the operation of the redundant storage system includes: determining a state of a cache block of a plurality of cache blocks, in which the plurality of storage devices includes a set of HDDs and a set of SSDs, an SSD RAID of the redundant storage system includes the set of SSDs, and an HDD RAID of the redundant storage system includes the set of HDDs, in which the SSD RAID is utilized as a cache system of the HDD RAID and includes the plurality of cache blocks; and performing a retry-read operation on at least one of the HDD RAID and the SSD RAID according to the state of the cache block, to obtain a correct version of data within the redundant storage system.

In the following, the invention is further illustrated by way of example, taking reference to the accompanying drawings. Thereof:
- Fig. 1: is a diagram illustrating a redundant storage system according to an embodiment of the present invention;
- Fig. 2: illustrates some cache blocks of various states in the cache storage system shown in Fig. 1 according to an embodiment of the present invention;
- Fig. 3: is a working flow of a method for performing data recovery in a redundant storage system according to an embodiment of the present invention.
- Fig. 4: illustrates an example of an unrepairable situation;
- Fig. 5: illustrates a working flow of a correction-in-advance mechanism of the method according to an embodiment of the present invention;
- Fig. 6: illustrates some data contents when the state of a cache block of an SSD RAID is in an empty state according to an embodiment of the present invention;
- Fig. 7: illustrates some data contents when the state of the cache block of the SSD RAID is in a dirty state according to an embodiment of the present invention;
- Fig. 8: illustrates some data contents when the state of the cache block of the SSD RAID is in a non-dirty state according to an embodiment of the present invention;
- Fig. 9: illustrates some data contents when the state of the cache block of the SSD RAID is in the non-dirty state according to another embodiment of the present invention;
- Fig. 10: is a flowchart of the method for performing data recovery in the redundant storage system according to an embodiment of the present invention; and
- Fig. 11: is a diagram of an apparatus for performing data recovery in the redundant storage system according to an embodiment of the present invention.

Embodiments of the present invention provide a data recovery mechanism applied in a redundant storage system, in which the redundant storage system can be a storage system with redundant storage ability or a multilayer storage system stack composed of a plurality of storage systems with redundant storage ability. For example, the storage system can include at least one Redundant Array of Independent Disk (RAID) or at least one Distributed Replicated Block Device (DRBD), and the data recovery mechanism can be implemented in the storage system. In another example, the plurality of storage systems can include at least one RAID or at least one DRBD, and the data recovery mechanism can be implemented in any of the plurality of storage systems. Based on the data recovery mechanism of embodiments of the present invention, the redundant storage system can automatically recover or amend data. When the file system or application finds corrupted data via a checksum or a hash value, the data recovery mechanism can automatically perform a background data recovery operation to assure the user will not read the incorrect content. For clarity, the file system with built-in checking ability can be an example of the file system of the redundant storage system. According to an aspect of the present invention, the file system may be regarded as a layer within the redundant storage system, such as a topmost layer of a plurality of layers within the redundant storage system, and a plurality of storage elements (e.g. one or more Solid State Drives (SSDs), one or more Hard Disk Drives (HDDs), one or more RAIDs) may be located in remaining layer(s) within the plurality of layers. For example, the remaining layer(s) may comprise one or more RAIDs and the storage devices thereof (e.g. one or more HDDs and/or one or more SSDs).

As the architecture of the redundant storage system may vary, the redundant storage system may comprise one or more sub-systems under the file system (e.g. the topmost layer of the layers). Examples of the one or more sub-systems may include, but are not limited to, a generic storage system and a cache storage system. The cache storage system comprises an HDD RAID and an SSD RAID that is utilized as a cache system of this HDD RAID. The HDD RAID and the SSD RAID can be regarded as a lower layer below the file system, SSDs of the SSD RAID can be regarded as a lower layer (e.g. a bottommost layer) below the SSD RAID, and HDDs of the HDD RAID can be regarded as a lower layer (e.g. a bottommost layer) below the HDD RAID. In addition, the generic storage system comprises an HDD RAID, but does not comprise any SSD RAID that is utilized as a cache system of this HDD RAID. The HDD RAID can be regarded as a lower layer below the file system, and HDDs of the HDD RAID can be regarded as a lower layer (e.g. a bottommost layer) below the HDD RAID. Please note that a plurality of control modules for implementing the data recovery mechanism may be in at least one portion (e.g. a portion or all) of the layers to perform the background data recovery operation mentioned above, and a Retry-Read command may be utilized by an upper layer within the layers for obtaining redundant data from a lower layer within the layers, to correct data error(s) and/or provide the user with correct data content. The Retry-Read command can be applied to the generic storage system without considering caching behaviors such as that of the cache storage system. When the Retry-Read command is applied to the cache storage system, however, a proper design such as an adaptive control mechanism is required.

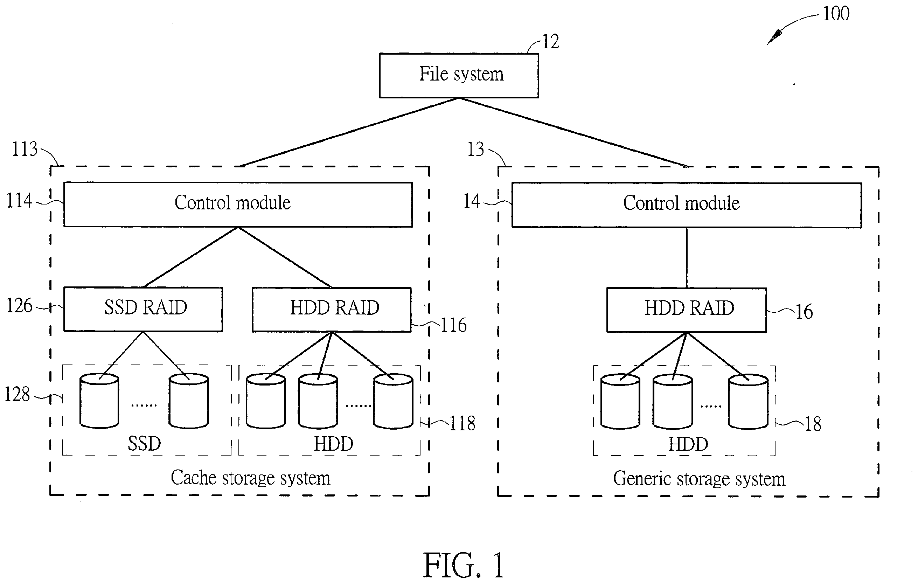

Fig. 1 is a diagram illustrating a redundant storage system 100 according to an embodiment of the present invention. For example, the redundant storage system 100 may include a file system 12 with built-in checking ability such as a file system with built-in checksum ability (which has the ability of using a stored checksum to check the error of a data block) or a file system with built-in hash value (which has the ability of using a stored hash value to check the error of the data block), and may further include a generic storage system 13 and a cache storage system 113, in which the generic storage system 13 can be taken as an example of the generic storage system mentioned above and the cache storage system 113 can be taken as an example of the cache storage system mentioned above. The generic storage system 13 may include a control module 14, an HDD RAID 16, and HDDs 18. The cache storage system 113 may include a control module 114, an HDD RAID 116, and HDDs 118, and may further include an SSD RAID 126, and SSDs 128. Examples of these RAIDs may include, but are not limited to, a RAID-1 storage system (whose RAID level is RAID 1), a RAID-5 storage system (whose RAID level is RAID 5), etc. According to this embodiment, the HDD RAID 16 includes a set of HDDs such as the HDDs 18, and the HDD RAID 16 is illustrated as an upper layer above the HDDs 18 to indicate that the HDD RAID 16 is a logical unit obtained from combining the HDDs 18. As the control module 14 may control operations of the generic storage system 13, the control module 14 is illustrated as an upper layer above the HDD RAID 16 in the generic storage system 13. In addition, the HDD RAID 116 includes a set of HDDs such as the HDDs 118, and the HDD RAID 116 is illustrated as an upper layer above the HDDs 118 to indicate that the HDD RAID 116 is a logical unit obtained from combining the HDDs 118. The SSD RAID 126 includes a set of SSDs such as the SSDs 128, and the SSD RAID 126 is illustrated as an upper layer above the SSDs 128 to indicate that the SSD RAID 126 is a logical unit obtained from combining the SSDs 128. As the control module 114 may control operations of the cache storage system 113, the control module 114 is illustrated as an upper layer above the RAIDs in the cache storage system 113 (e.g. the HDD RAID 116 and the SSD RAID 126).

Normally, no matter what operating system is used to implement the file system 12, the layers of the redundant storage system 100 can use the following four basic commands:
(CMD1). Read(block_index);
(CMD2). Write(DATA, block_index);
(CMD3). Return(DATA, block_index); and
(CMD4). Return(ERR, block_index);
Regarding a command sender in one of the layers, the first two commands of these commands are the commands sent to a lower layer (e.g. the lower layer adjacent to the layer where the command sender is located) from the layer, while the last two commands are sent to an upper layer (e.g. the upper layer adjacent to the layer where the command sender is located) from the layer. In the redundant storage system 100, the first two commands can be sent to the lower layers by any of the file system 12, the control module 14, the HDD RAID 16, the control module 114, the HDD RAID 116, and the SSD RAID 126 while the last two commands can be sent to the upper layers by any of the control module 14, the HDD RAID 16, the HDDs 18, the control module 114, the HDD RAID 116, the HDDs 118, the SSD RAID 126, and the SSDs 128. For example, the command Read(block_index) can be arranged to read a data block corresponding to an index block_index from the storage device or the storage system of the lower layer, thus the command Read(block_index) can be called the read command. The command Write(DATA, block_index) can be arranged to write the data DATA corresponding to the index block_index into the storage device or the storage system of the lower layer, thus the command Write(DATA, block_index) can be called the write command. The command Return(DATA, block_index) can be arranged to send the data DATA corresponding to the index block_index back to the upper layer, thus the command Return(DATA, block_index) can be called the data return command. The command Return(ERR, block_index) can be used to report the failure of the data reading operation (i.e. reading the operation of the data block corresponding to the index block_index) corresponding to the index block_index to the upper layer, thus the command Return(ERR, block_index) can be called the error report command, in which the error information ERR points out the failure. These basic commands are shown in the exhibited format to indicate their main characteristic. For different types of operating systems, the detailed definition of these basic commands may be varied, but the main characteristic still corresponds to the above-mentioned example.

The data recovery mechanism (e.g. the plurality of control modules, such as the control modules 14 and 114) can recognize and use these commands, and can use at least one additional command (e.g. one or more additional commands) including:
(CMD5). Read_Retry(block_index).
Regarding a command sender in one of the layers, the additional command(s) is the command sent to the lower layer (e.g. the lower layer adjacent to the layer where the command sender is located) from the layer. In the redundant storage system 100, the additional command(s) can be sent to the lower layers by any of the file system 12, the control module 14, the HDD RAID 16, the control module 114, the HDD RAID 116, and the SSD RAID 126. For example, the command Read_Retry(block_index) is arranged to read the redundant data block corresponding to the index block_index from the storage device or the storage system of the lower layers to perform a retry-read operation, thus the command Read_Retry(block_index) may be called the read retry command, and can be taken as an example of the aforementioned Retry-Read command. When the data is correct, the data of the redundant data block corresponding to the index block_index is the same as the data of the data block corresponding to the index block_index. In some embodiments, the command Read_Retry(block_index) and command Read(block_index) can be integrated into one command with the same name, such as a command Read(block_index, RETRY). They can be distinguished by a new bit flag RETRY, in which the bit flag RETRY is arranged to indicate whether the command is the command Read_Retry(block_index), thus the bit flag RETRY is also called a retry bit flag. For example, when the big flag RETRY is set to have logic value 1, the command Read(block_index, RETRY) represents the command Read_Retry(block_index); otherwise (i.e. the big flag RETRY is set to have logic value 0), the command Read(block_index, RETRY) represents the command Read(block_index).

For example, in the file system 12 (e.g. Btrfs) coupled with the generic storage system 13, when 1-bit data error occurs, the file system 12 may detect it and restore the data with the aid of the control module 14 by the following operations:
(1). Read operation: when the file system 12 reads data (including data content and checking information) from a lower layer, the file system 12 may calculate checking information of the data, wherein if the calculated checking information and the read checking information are different from each other, the data from the lower layer is incorrect;
(2). Retry-read operation: the file system 12 may read the redundant version(s) of the data in the lower layer, and calculate checking information of the redundant version(s), wherein when the checking information of the redundant version is the same as the read checking information, the redundant version is a correct version of the data and therefore the correct version of the data is found, otherwise, the retry-read operation may be repeated for another redundant version of the data; and
(3). Write operation: when the checking information of the redundant version is the same as the read checking information, the correct version of the data is found, and the file system 12 may write the correct version to the lower layer to recover the data.
For example, the checking information in the above operations can be checksums, hash values or the like. Please note that the aforementioned proper design such as the adaptive control mechanism is required when trying to apply the above operations to the file system 12 coupled with the cache storage system 113, since the cache storage system 113 may have at least one portion (e.g. a portion or all) of the following features:
(F1). The SSD RAID 126 may be combined with the HDD RAID 116;
(F2). The SSD RAID 126 may have been divided into a plurality of cache blocks (e.g. the size of each of the cache blocks may be 64 kilobytes (KB), and the minimum accessing unit may be a sub-block of 64 KB within a cache block), so as to store hot data, such as frequently accessed data or data having been frequently accessed during a predetermined period;
(F3). When new data is written into a cache block of the SSD RAID 126, the cache block may have the new data that is newer than the data in the HDD RAID 116, wherein this cache block may be called a dirty block after the cache block stores the new data with the new data having not been updated into the HDD RAID 116, or may be called a non-dirty block after the new data is updated into the HDD RAID 116 (e.g. the data in the cache block is the same as the data in the corresponding block of the HDD RAID 116), and the control module 114 that is equipped with the adaptive control mechanism may handle the cache storage system 113 in various situations related to the feature (F3);
(F4). The new data in the dirty block in the SSD RAID 126 may be updated into the HDD RAID 116 dynamically (for example, when the dirty block percentage (i.e. percentage of dirty blocks) is more than a predetermined percentage (such as 20%) of overall data in the SSD RAID 126), wherein the control module 114 that is equipped with the adaptive control mechanism may handle the cache storage system 113 in various situations related to the feature (F4); and
(F5). When the hot data in the SSD RAID 126 becomes cold data, such as non-frequently accessed data or data having not been frequently accessed during the predetermined period, the cold data may be swapped to the HDD RAID 116, wherein the control module 114 that is equipped with the adaptive control mechanism may handle the cache storage system 113 in various situations related to the feature (F5).
In one or more embodiments, the hot data can be data that is accessed more frequently than the cold data. In another embodiment, the hot data can be data that is written to the file system 12 first time because the data just written has higher probability of being accessed again. In yet another embodiment, the file system 12 may have two types of storage media, in which one of the storage media has higher accessing speed than that of the other, and the hot data can be data stored in the storage medium with higher accessing speed, the cold data can be the data stored in the storage medium with lower accessing speed. In an implementation, the hot data can be data that is stored in one or more of the SSDs 128, and the cold data is data that is stored in one or more of the HDDs 118.

In the cache storage system 113, the correct data may be stored in the SSD RAID 126 or HDD RAID 116 depending on the state of the cache blocks. The control module 114 may operate in an efficient way to determine where the data recovery mechanism should be applied. More specifically, in the file system 12 coupled with the cache storage system 113, when the control module 114 accesses data from the storage media (e.g. from the lower layers thereof), the control module 114 may inquire the SSD RAID 126 first. If the SSD RAID 126 does not have the data being inquired, the control module 114 may inquire the HDD RAID 116 and return the data. In an embodiment, after the data is found in the HDD RAID 116, the data may be regarded as hot data and replicated to the SSD RAID 126. In addition to replicating data to the SSD RAID 126, when data is first written to the file system 12 coupled with the cache storage system 113, the data may be written into the SSD RAID 126, and such data may not be written into the HDD RAID 116 immediately. Only when the file system 12 is less busy or when the dirty block percentage is more than the predetermined percentage, the written data (stored in the dirty block) in the SSD RAID 126 is synchronized into (e.g. written into) the HDD RAID 116.

In some embodiments, if the file system 12 finds that the data is incorrect (e.g. data rot or one-bit error occurs), the data recovery mechanism may be initiated to perform the data recovery operation(s). For example, the data error may occur in the SSD RAID 126 or the HDD RAID 116, and the cache blocks may have different degrees of popularity (e.g. some of the cache blocks may have hot data and others of the cache blocks may have cold data) in the SSD RAID 126. In order to make sure all the data in SSD RAID 126 and HDD RAID 116 are correct, the retry-read recovery mechanism regarding the generic storage system 13 (e.g. the retry-read operations and the associated data recovery operations for the generic storage system 13) may be adapted for the cache storage system 113, where some associated implementation details are described in the following embodiments. Thus, the data recovery mechanism is compatible with both the generic storage system 13 and the cache storage system 113.

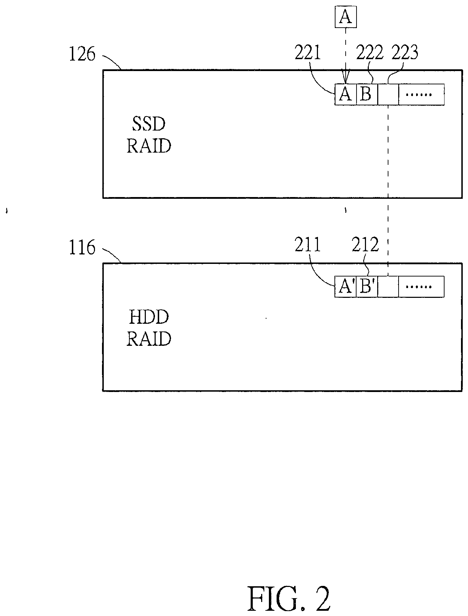

Fig. 2 illustrates some cache blocks of various states in the cache storage system 113 shown in Fig. 1 according to an embodiment of the present invention. According to this embodiment, the file system 12 coupled with the cache storage system 113 may determine the state(s) of at least one portion (e.g. a portion or all) of the plurality of cache blocks and perform the retry-read operation on the cache storage system 113 according to the state(s) of the aforementioned at least one portion of the plurality of cache blocks. Examples of the state of one of the plurality of cache blocks (e.g. any of the plurality of cache blocks, such as each of the plurality of cache blocks) may include: a dirty state in which the data is found in the cache block and the data in the cache block is not the same as that (e.g. an older version of the data) in the corresponding block of the HDD RAID 116, wherein the cache block may be referred to as a dirty block; a non-dirty state in which the data is found in the cache block and the data in the cache block is the same as the data in the corresponding block of the HDD RAID 116, wherein the cache block may be referred to as a non-dirty block; and an empty state, in which the data is not stored in the cache block, wherein the cache block may be referred to as an empty block. Regarding the dirty block, the data is written to the SSD RAID 126 (e.g. written into the dirty block) but has not been written back to the HDD RAID 116 yet. For example, the cache block 221 may be regarded as a dirty block, since data A may have just been written into the SSD RAID 126 (e.g. the cache block 221), and the HDD RAID 116 (e.g. the block 211) may not have the data A or may have an older version of data A, such as data A' which is different from the data A. Regarding the non-dirty block, the data may be a replicated version of the HDD RAID 116, or the data may be synchronized to (e.g. updated into) the HDD RAID 116 after being written to the SSD RAID 126. For example, the cache block 222 may be regarded as a non-dirty block, since data B is the same as data B' stored in the block 212 in any of two cases. In one of the two cases, such as a first case, data B may be a replication version of data B' from the HDD RAID 116. In the other of the two cases, such as a second case, data B may have been synchronized to (e.g. updated into) the HDD RAID 116 as data B'. Regarding the empty block, the data is not stored in the cache block, and it does not cache any data. For example, the cache block 223 may be regarded as an empty block. The cache block 223 does not cache any data and is empty.

When the file system 12 finds that the data is incorrect, the Retry-Read command may be transmitted to the control module 114 by the file system 12. The control module 114 may be implemented as a software module programmed to perform operations of the data recovery mechanism, but the present invention is not limited thereto. In some embodiments, the control module 114 may be implemented as a dedicated and customized hardware circuit configured to perform the data recovery function (e.g. the operations of the data recovery mechanism).

In an embodiment, in addition to preforming the operations of the data recovery mechanism, the control module 114 may further send input/output (IO) requests to the SSD RAID 126 or the HDD RAID 116, and manage the cache blocks (e.g. manage hot data and cold data).

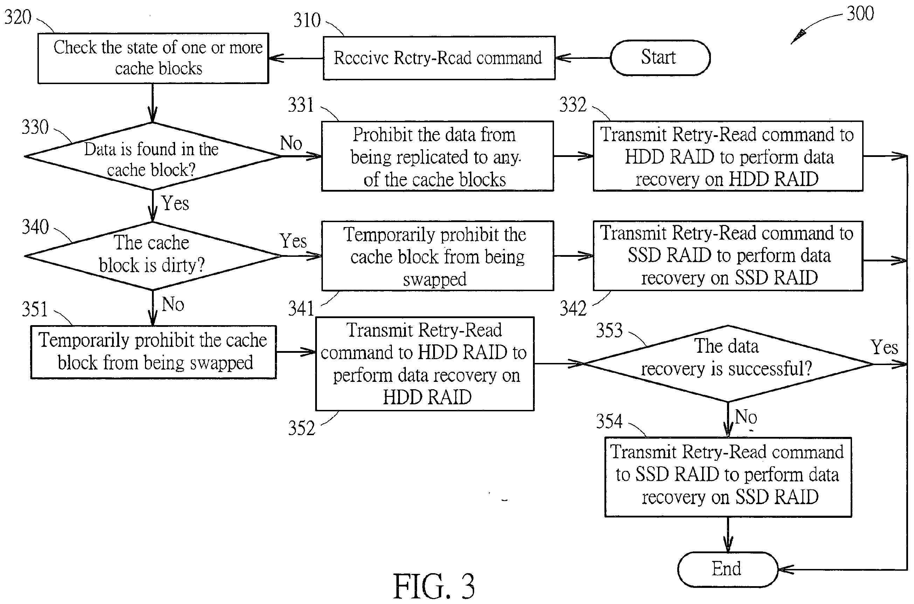

The control module 114 may detect the state(s) of the cache blocks, and under control of the control module 114, the Retry-Read command may be performed in the HDD RAID 116 or the SSD RAID 126 with respect to the state(s) of the cache blocks. Regarding how operations associated to the Retry-Read command are performed according to the data recovery mechanism, some greater details are illustrated in the embodiment shown in Fig. 3.

Fig. 3 is a working flow 300 of a method for performing data recovery in a redundant storage system according to an embodiment of the present invention. The method can be applied to the aforementioned redundant storage system, such as the redundant storage system 100 shown in Fig. 1, and can be applied to the control module 114.

In Step 310, the control module 114 may receive the Retry-Read command. For example, the file system 12 may have found that an error (e.g. the one-bit data error) occurs and therefore may send the Retry-Read command such as the command Read_Retry(block_index). For the file system 12, the command Read_Retry(block_index) may be arranged to read the redundant data block corresponding to the index block_index from the storage system (e.g. the cache storage system 113) of the lower layers of the file system 12 to perform a retry-read operation. The command Read_Retry(block_index) may be further transmitted or forwarded to one or more layers of the lower layers of the file system 12, and more particularly, may be further transmitted or forwarded by the control module 114 within the cache storage system 113, to perform the retry-read operation with respect to the one or more layers. For the control module 114 in the cache storage system 113, the command Read_Retry(block_index) may be arranged to read the redundant data block corresponding to the index block_index from the storage system (e.g. the HDD RAID 116, the SSD RAID 126, etc.) or the storage device (e.g. the HDDs 118, the SSDs 128, etc.) of the lower layers of the control module 114 to perform a retry-read operation such as that mentioned above.

According to this embodiment, the control module 114 may manage the cache storage system 113 to serve the file system 12, and may receive the Retry-Read command from the upper layer thereof (i.e. the file system 12). The control module 114 may perform a plurality of preparation operations (e.g. one or more of the operations of Step 320, Step 330, Step 331, Step 340, Step 341, and Step 351) first, and then perform data recovery (e.g. one or more of the operations of Step 332, Step 342, Step 352, and Step 354) in response to the Retry-Read command to obtain the correct version of the data (e.g. the correct version to be found through the Retry-Read command). Please note that at least one portion (e.g. a portion or all) of the preparation operations is related to the state of the cache block.

In Step 320, the control module 114 may check the state of one or more cache blocks, and more particularly, may determine the state of a cache block of the aforementioned at least one portion (e.g. a portion or all) of the plurality of cache blocks. The cache block is within the one or more cache blocks. For example, the cache block may correspond to the block index of the Retry-Read command, such as the index block_index of the command Read_Retry(block_index).

In Step 330, the control module 114 may determine whether the data (e.g. the data to be read through the Retry-Read command) is found in the cache block. When the data is found in the cache block (e.g. the cached data is found), Step 340 is entered; otherwise (e.g. the cached data is not found), Step 331 is entered.

In Step 331, the control module 114 may prohibit the data (more particularly, the data in the corresponding block of the HDD RAID 116) from being replicated to any of the cache blocks. As the data is not found in the cache block, and as data recovery is required, it is unnecessary to cache from the HDD RAID 116 to the SSD RAID 126 since caching may be meaningless (e.g. incorrect data may be cached from the HDD RAID 116 to the SSD RAID 126 during caching). The control module 114 may save time by prohibiting the data in the corresponding block of the HDD RAID 116 from being replicated to any of the cache blocks.

In Step 332, the control module 114 may transmit the Retry-Read command (e.g. the command Read_Retry(block_index)) to the HDD RAID 116 to perform data recovery on the HDD RAID 116. For example, the HDD RAID 116 may forward and transmit the Retry-Read command to one or more HDDs within the HDDs 118 to perform the retry-read operation, and therefore may read a redundant data block (such as that corresponding to the index block_index in the command Read_Retry(block_index)) from the one or more HDDs for the control module 114. When the data of the redundant data block is returned from the one or more HDDs, the file system 12 may find the correct version of the data and write the correct version to the lower layers to recover the data (e.g. correct an erroneous block). According to some embodiments, when the data of the redundant data block is returned from the one or more HDD, the HDD RAID 116 or the control module 114 may find the correct version of the data and write the correct version to the lower layer(s) thereof to recover the data.

In Step 340, the control module 114 may determine whether the cache block is dirty (e.g. the cache block is a dirty block). When the cache block is dirty (which means the cache block is a dirty block), Step 341 is entered; otherwise (i.e. when the cache block is non-dirty, which means the cache block is a non-dirty block), Step 351 is entered.

In Step 341, the control module 114 may temporarily prohibit the cache block (i.e. the cache block mentioned in Step 340) from being swapped. Since the cache block is dirty, the version of the data in the SSD RAID 126 is newer than the version of the data in the HDD RAID 116, and the latest correct data may only exist in the SSD RAID 126. If the version of the data in the SSD RAID 126 were synchronized to HDD RAID 116 and swapped, then all versions of the data in the file system 12 would be incorrect, because the control module 114 would read an incorrect copy (or incorrect version) of the data from the SSD RAID 126 and synchronize it to the HDD RAID 116. As a result of performing the operation of Step 341, the control module 114 may temporarily prohibit the cache block from being swapped, to guarantee that the correct version of the data can be obtained.

In Step 342, the control module 114 may transmit the Retry-Read command (e.g. the command Read_Retry(block_index)) to the SSD RAID 126 to perform data recovery on the SSD RAID 126. For example, the SSD RAID 126 may forward and transmit the Retry-Read command to one or more SSDs within the SSDs 128 to perform the retry-read operation, and therefore may read a redundant data block (such as that corresponding to the index block_index in the command Read_Retry(block_index)) from the one or more SSDs for the control module 114. When the data of the redundant data block is returned from the one or more SSDs, the file system 12 may find the correct version of the data and write the correct version to the lower layers to recover the data (e.g. correct an erroneous block). According to some embodiments, when the data of the redundant data block is returned from the one or more SSDs, the SSD RAID 126 or the control module 114 may find the correct version of the data and write the correct version to the lower layer(s) thereof to recover the data.

In Step 351, the control module 114 may temporarily prohibit the cache block (i.e. the cache block mentioned in Step 340) from being swapped. Since the cache block is non-dirty, the version of the data in the HDD RAID 116 and the version of the data in the SSD RIAD 126 have been synchronized, and the correct version of the data may exist in the SSD RAID 126 or in the HDD RAID 116. In case of the correct version of the data only existing in the SSD RAID 126, the control module 114 may temporarily prohibit the cache block from being swapped, to guarantee that the correct version of the data can be obtained.

In Step 352, the control module 114 may transmit the Retry-Read command (e.g. the command Read_Retry(block_index)) to the HDD RAID 116 to perform data recovery on the HDD RAID 116. For example, the HDD RAID 116 may forward and transmit the Retry-Read command to one or more HDDs within the HDDs 118 to perform the retry-read operation, and therefore may read a redundant data block (such as that corresponding to the index block_index in the command Read_Retry(block_index)) from the one or more HDDs for the control module 114. When the data of the redundant data block is returned from the one or more HDDs, the file system 12 may find the correct version of the data and write the correct version to the lower layers to recover the data (e.g. correct an erroneous block).

In Step 353, the control module 114 may determine whether the data recovery is successful. When the data recovery is successful, the working flow 300 comes to the end; otherwise, Step 354 is entered.

In Step 354, the control module 114 may transmit the Retry-Read command (e.g. the command Read_Retry(block_index)) to the SSD RAID 126 to perform data recovery on the SSD RAID 126. For example, the SSD RAID 126 may forward and transmit the Retry-Read command to one or more SSDs within the SSDs 128 to perform the retry-read operation, and therefore may read a redundant data block (such as that corresponding to the index block_index in the command Read_Retry(block_index)) from the one or more SSDs for the control module 114. When the data of the redundant data block is returned from the one or more SSDs, the file system 12 may find the correct version of the data and write the correct version to the lower layers to recover the data (e.g. correct an erroneous block).

According to some embodiments, the operation of Step 352 and the operation of Step 354 may be interchangeable (e.g. after the operation of Step 351 is performed, the operation of Step 354 is performed first, and then the operation of Step 353 is performed, and the operation of Step 352 may be performed when it is determined in Step 353 that the data recovery is not successful). Since most of data in the SSD RAID 126 is a replicated version from the HDD RAID 116, it may be more efficient to send the Retry-Read command to the HDD RAID 116 in the first place.

According to an embodiment, the adaptive control mechanism of the control module 114 allows the cache storage system 113 to perform data correction efficiently and correctly. The cache block 221 shown in Fig. 2 may be regarded as a dirty block since data A is dirty data (e.g. data A is not equivalent to data A'). The data A is written to the SSD RAID 126 (e.g. written into the cache block 221) but has not yet been written into the HDD RAID 116. The control module 114 may trigger the SSD RAID 126 to perform the Retry-Read command, and more particularly, to read the redundant version(s) of the data in the lower layer thereof (e.g. the bottommost layer thereof, such as the SSDs 128) in response to the Retry-Read command sent from the control module 114. The control module 114 may be equipped with a swap prevention mechanism to avoid the cache block 221 from being swapped. Based on the swap prevention mechanism, the control module 114 may check whether any of a plurality of predetermined conditions is satisfied. When any of the plurality of predetermined conditions is satisfied, the control module 114 may temporarily lock the cache block 221 to prevent the dirty data in the cache block 221 from being swapped. Examples of the plurality of predetermined conditions may include, but are not limited to:
(C1). The control module 114 receives a non-4KB aligned IO request;
(C2). There is an overlap of IO range between an IO request and another IO request;
(C3). The data (e.g. data A) becomes cold data, such as data having not been accessed for a long period of time.
In addition, the cache block 222 shown in Fig. 2 may be regarded as a non-dirty block since data B is non-dirty data (e.g. data B is the same as data B'). In the first case, the data in the SSD RAID 126 (e.g. data B in the cache block 222) is replicated from the HDD RAID 116 (e.g. the block 212). The control module 114 may trigger the HDD RAID 116 to perform the Retry-Read command, and more particularly, to read the redundant version(s) of the data in the lower layer thereof (e.g. the bottommost layer thereof, such as the HDDs 118) in response to the Retry-Read command sent from the control module 114. The control module 114 may further prohibit data from being replicated to the SSD RAID 126 during the data correction triggered through the Retry-Read command. In the second case, the data in the SSD RAID 126 (e.g. data B in the cache block 222) has been synchronized to (e.g. updated into) the HDD RAID 116 (e.g. the block 212) as data B', so data B and data B' are synchronized with each other. For better comprehension, Table 1 illustrates repairable situations (S1) and (S2) and an unrepairable situation (S0) of this embodiment. The control module 114 may be further equipped with an additional mechanism, such as a correction-in-advance mechanism in another embodiment described later, to prevent the unrepairable situation. Additionally, the cache block 223 shown in Fig. 2 may be regarded as an empty block since the cache block 223 is empty (e.g. no data exists in the cache block 223). This may happen when the cache blocks in the SSD RAID 126 are insufficient. As the data is stored in the HDD RAID 116, the control module 114 may trigger the HDD RAID 116 to perform the Retry-Read command, and more particularly, to read the redundant version(s) of the data in the lower layer thereof (e.g. the bottommost layer thereof, such as the HDDs 118) in response to the Retry-Read command sent from the control module 114.

**Table 1**

| | No Cache | RW Cache |
|---|---|---|
| There is a read error in the HDD RAID | Repairable | Repairable |
| There is a read error in the SSD RAID | Not applicable | Repairable situation: |
| | | (S1). The data in the SSD RAID is a replication version of the HDD RAID. |
| | | (S2). The data in the SSD RAID has not been written back to the HDD RAID. |
| | | Unrepairable situation: |
| | | (S0). The data in the SSD RAID has been written back to the HDD RAID, and has been swapped. |

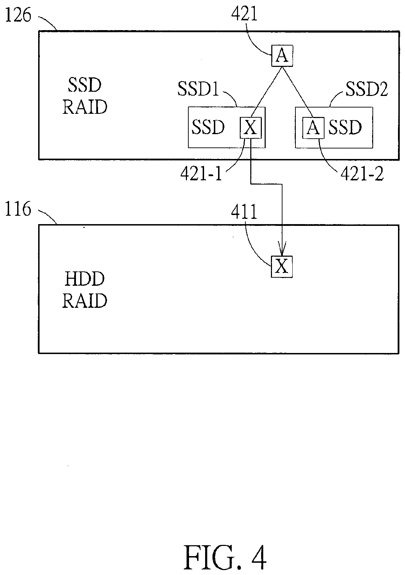

Fig. 4 illustrates an example of the unrepairable situation (S0). For better comprehension, the SSD RAID 126 may be illustrated with a RAID-1 architecture of the SSD RAID 126 with two SSDs SSD1 and SSD2, and the two SSDs SSD1 and SSD2 may be illustrated within the RAID-1 architecture to indicate that the cache block 421 (e.g. originally having data A) in the SSD RAID 126 corresponds to (e.g. is logically mapped to) the SSD block 421-1 of the SSD SSD1 and the SSD block 421-2 of the SSD SSD2. Suppose that the one-bit error occurs in one of the cache blocks 421-1 and 421-2, such as the SSD block 421-1, and therefore the data in the SSD block 421-1 becomes the erroneous data X. When the SSD block 421-1 is synchronized to the HDD RAID 116, the erroneous data X is updated to (e.g. written into) the corresponding block 411 of the HDD RAID 116. As the SSD SSD1 (e.g. the SSD block 421-1) is the data source during the synchronization, the erroneous data X in the block 411 (i.e. the data synchronized from the SSD SSD1) is also incorrect. After that, the data A may become cold data, and the cache blocks of the SSD RAID 126 may be swapped (e.g. the cache block 421 may be utilized for caching other data, so any data in each of the cache blocks 421-1 and 421-2 may be replaced with the other data). The data A originally in the SSD RAID 126 is lost, and the block 411 of the HDD RAID 116 stores the erroneous data X, rather than the data A. As a result, the data supposed to be the data A in each of the SSD RAID 126 and the HDD RAID 116 is incorrect.

As mentioned, the SSD RAID 126 may be illustrated with the RAID-1 architecture. It should be understood that the RAID type shown in the figure(s) of this document is not intended to limit the present invention. The RAID types of the HDD RAID 116 and/or the SSD RAID 126 may vary. Examples of the RAID types may include, but are not limited to: RAID-1, RAID-5, RAID-6, DRBD, or any other kinds of RAID types.

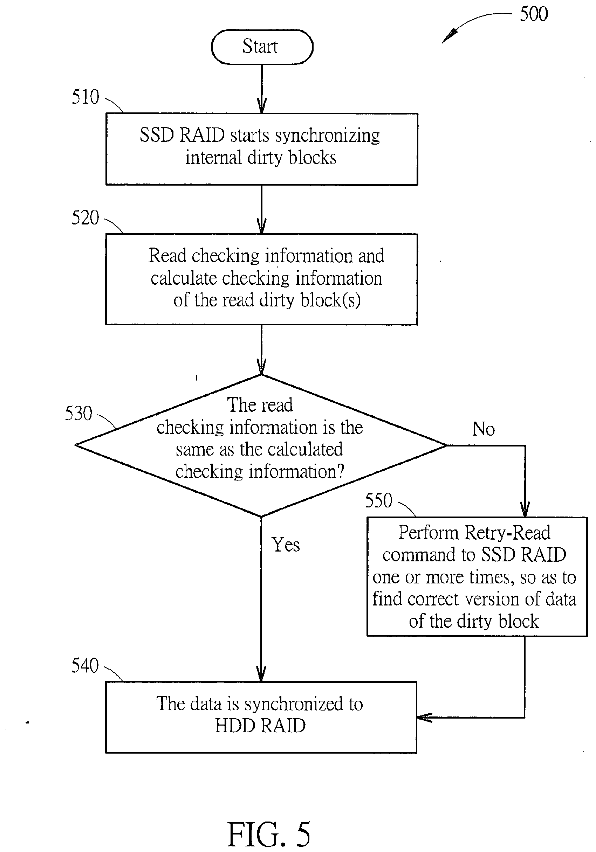

Fig. 5 illustrates a working flow 500 of the correction-in-advance mechanism of the method according to an embodiment of the present invention. The correction-in-advance mechanism can make sure the data is correct when the cache storage system 113 (e.g. under control of the control module 114) is synchronizing the data from the SSD RAID 126 to the HDD RAID 116.

In Step 510, the SSD RAID 126 may start synchronizing internal dirty blocks.

In Step 520, the control module 114 may read the checking information and calculate the checking information of the read dirty block(s), such as one or more of the dirty blocks. For example, in an initial phase of data synchronization, the SSD RAID 126 may read the data of a dirty block from the lower layer thereof (e.g. the bottommost layer thereof, such as the SSDs 128), to provide the control module 114 with the data, such as both of the checking information (e.g. a checksum or a hash value) and the data content of the data of the dirty block. In addition, the control module 114 may read the checking information (e.g. the checksum or the hash value) of the data of the dirty block as the read checking information, and calculate the checking information of the data according to the data content of the data of the dirty block.

In Step 530, with regard to the dirty block, the control module 114 may determine whether the read checking information is the same as the calculated checking information. When the read checking information is the same as the calculated checking information, Step 540 is entered; otherwise, Step 550 is entered.

In Step 540, under control of the control module 114, the data (more particularly, the data of the dirty block, such as both of the data content and the checking information) is synchronized to (e.g. written into) the HDD RAID 116.

In Step 550, the control module 114 may perform the Retry-Read command to the SSD RAID 126 one or more times, so as to find the correct version of data of the dirty block. More specifically, the control module 114 may send the Retry-Read command to the SSD RAID 126 to trigger the SSD RAID 126 to perform the Retry-Read command, and more particularly, to read the redundant version(s) of the data in the lower layer thereof (e.g. the bottommost layer thereof, such as the SSDs 128) in response to the Retry-Read command sent from the control module 114.

For example, the operation of Step 520 and the subsequent operations in the loop coming after Step 520 (e.g. the operations of Step 530 and Step 540, or the operations of Step 530 and Step 550) may be repeated for any unread dirty block within the dirty blocks mentioned in Step 510.

By applying the working flow 500 shown in Fig. 5, the data synchronized to the HDD RAID 116 will be always correct, and the one-bit error issue during the synchronization from the SSD RAID 126 to the HDD RAID 116 (e.g. in the unrepairable situation (S0)) can be avoided. According to this embodiment, when the SSD RAID 126 starts synchronizing the dirty blocks within the plurality of cache blocks, the control module 114 may determine the correctness of data of each dirty block of the dirty blocks before writing the data of the dirty block into the HDD RAID 116. The state of the dirty block is the dirty state in which the data of the dirty block is found in the dirty block and the data of the dirty block is not the same as that in the corresponding block of the HDD RAID 116. In addition, the method may ensure the correctness of the data when synchronization is performed. For example, the control module 114 may add the checking information (e.g. the checksum or the hash value) into each of the cache blocks, and may update the checking information when the data is written into the cache block.

According to another embodiment in which the correction-in-advance mechanism is applied to the control module 114, since the data in the HDD RAID 116 is always correct, the operation of Step 354 shown in Fig. 3 may be omitted.

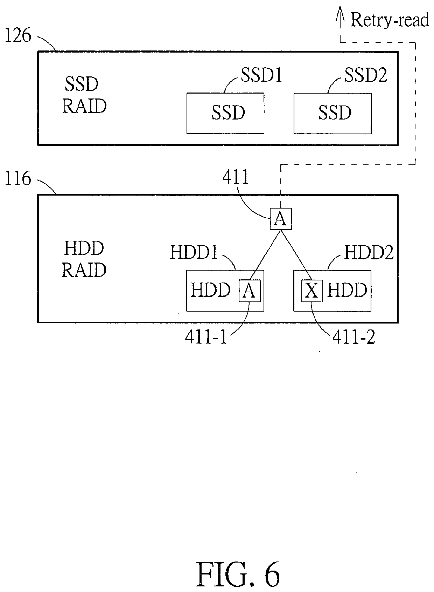

Fig. 6 illustrates some data contents when the state of the cache block of the SSD RAID 126 is in the empty state according to an embodiment of the present invention. For better comprehension, the SSD RAID 126 may be illustrated with the RAID-1 architecture of the SSD RAID 126 with the two SSDs SSD1 and SSD2, the HDD RAID 116 may be illustrated with a RAID-1 architecture of the HDD RAID 116 with two HDDs HDD1 and HDD2, and the two HDDs HDD1 and HDD2 may be illustrated within the RAID-1 architecture of the HDD RAID 116 to indicate that the block 411 in the HDD RAID 116 corresponds to (e.g. is logically mapped to) the HDD block 411-1 of the HDD HDD1 and the HDD block 411-2 of the HDD HDD2. As the state of the cache block is the empty state (e.g. the checking result of Step 330 may indicate that Step 331 should be entered), the control module 114 may perform the operations of Step 331 and Step 332 shown in Fig. 3. The correct version of the data (e.g. the data A) may be read from the HDD RAID 116 through the retry-read operation (labeled "Retry-read" in Fig. 6, for brevity) in Step 332.

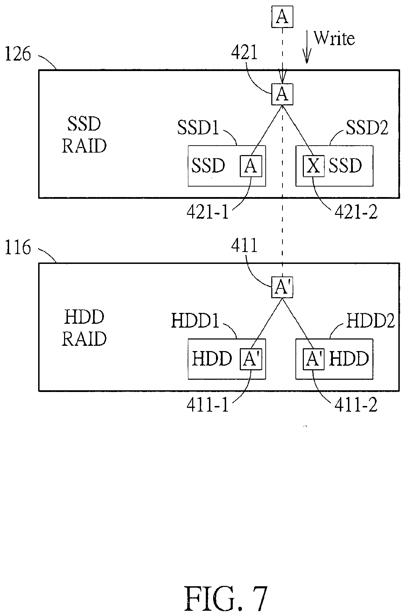

Fig. 7 illustrates some data contents when the state of the cache block of the SSD RAID 126 is in the dirty state according to an embodiment of the present invention. As the state of the cache block is the dirty state (e.g. the checking result of Step 340 may indicate that Step 341 should be entered), the control module 114 may perform the operations of Step 341 and Step 342 shown in Fig. 3. The data (e.g. the data A) may have just been written into the SSD RAID 126 through a write operation (labeled "Write" in Fig. 7, for brevity) without being synchronized into the HDD RAID 116. As the correct version of the data (e.g. the data A) exists in the SSD block 421-1, the correct version may be read from the SSD RAID 126 through the retry-read operation in Step 342.

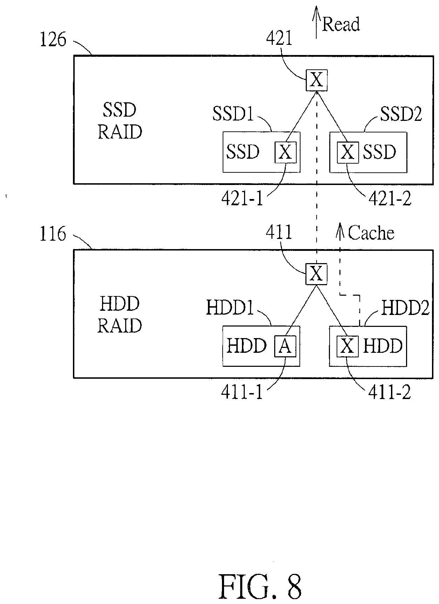

Fig. 8 illustrates some data contents when the state of the cache block of the SSD RAID 126 is in the non-dirty state according to an embodiment of the present invention. As the state of the cache block is the non-dirty state (e.g. the checking result of Step 340 may indicate that Step 351 should be entered), the control module 114 may perform at least one portion (e.g. a portion or all) of the operations of Step 351 through to Step 354 shown in Fig. 3. The erroneous data X may have just been read and copied (e.g. cached, labeled "Cache" in Fig. 8, for brevity) into the SSD RAID 126 through a read operation (labeled "Read" in Fig. 8, for brevity). Based on the working flow 300, after the operation of Step 351 is performed, the operation of Step 352 is performed first. The control module 114 may perform data recovery on the HDD RAID 116 in Step 352. As the correct version of the data (e.g. the data A) exists in the HDD block 411-1, the correct version of the data may be read from the HDD RAID 116 through the retry-read operation in Step 352.

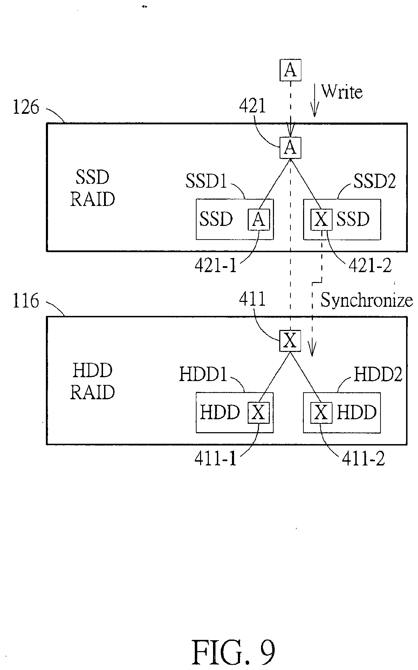

Fig. 9 illustrates some data contents when the state of the cache block of the SSD RAID 126 is in the non-dirty state according to another embodiment of the present invention. As the state of the cache block is the non-dirty state (e.g. the checking result of Step 340 may indicate that Step 351 should be entered), the control module 114 may perform at least one portion (e.g. a portion or all) of the operations of Step 351 through to Step 354 shown in Fig. 3. The data (e.g. the data A) may have been written into the SSD RAID 126 through a write operation (labeled "Write" in Fig. 9, for brevity), but the erroneous data X may have been synchronized (e.g. labeled "Synchronize" in Fig. 9, for brevity) into the HDD RAID 116. Based on the working flow 300, after the operation of Step 351 is performed, the operations of Step 352, Step 353, and Step 354 are performed. As the correct version of the data (e.g. the data A) exists in the SSD block 421-1, the correct version may be read from the SSD RAID 126 through the retry-read operation in Step 354.

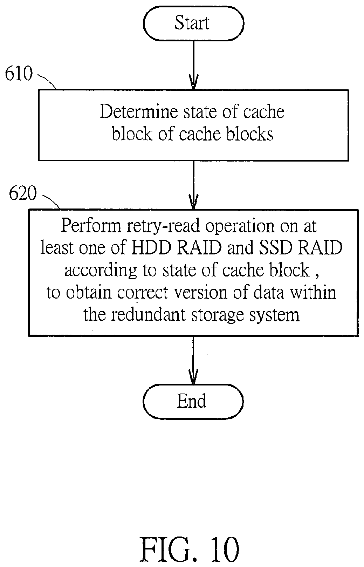

Fig. 10 is a flowchart of the method for performing data recovery in the redundant storage system according to an embodiment of the present invention.

In Step 610, the control module 114 may determine the state of the cache block of the plurality of cache blocks.

In Step 620, the control module 114 may perform the retry-read operation on the at least one of the HDD RAID 116 and the SSD RAID 126 according to the state of the cache block, to obtain the correct version of the data within the redundant storage system 100.

Some related implementation details of the method are described in the above embodiments. For brevity, similar descriptions for this embodiment are not repeated in detail here.

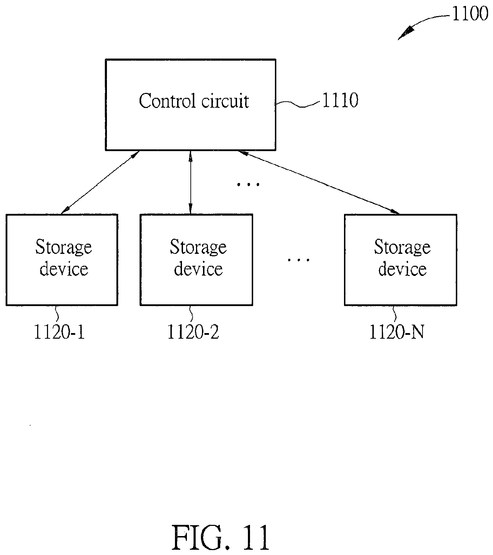

Fig. 11 is a diagram of an apparatus for performing data recovery in the redundant storage system 100 according to an embodiment of the present invention. The apparatus 1100 may include at least one portion (e.g. a portion or all) of the redundant storage system 100. For example, the apparatus may include a control circuit 1110 (e.g. the control module 114) that is located in a specific layer of the plurality of layers in the redundant storage system 100 and coupled to a plurality of storage devices {1120-1, 1120-2, ..., 1120-N} of the redundant storage system 100, in which the control circuit 1110 is arranged to control an operation of the redundant storage system 100. The step of controlling the operation of the redundant storage system 100 may include: determining the state of the cache block of the plurality of cache blocks, in which the plurality of storage devices {1120-1, 1120-2, ..., 1120-N} includes a set of HDDs (e.g. the HDDs 118) and a set of SSDs (e.g. the SSDs 128), an SSD RAID (e.g. the SSD RAID 126) of the redundant storage system 100 includes the set of SSDs, and an HDD RAID (e.g. the HDD RAID 116) of the redundant storage system 100 includes the set of HDDs, in which the SSD RAID is utilized as the cache system of the HDD RAID and includes the plurality of cache blocks; and performing the retry-read operation on at least one of the HDD RAID and the SSD RAID according to the state of the cache block, to obtain the correct version of the data within the redundant storage system 100. Examples of the control circuit 1110 may include, but are not limited to: at least one processor running the aforementioned software module programmed to perform operations of the data recovery mechanism, in which the processor becomes a specialized circuit for carrying out the data recovery mechanism while running the aforementioned software module; and the aforementioned dedicated and customized hardware circuit configured to perform the data recovery function. As the apparatus is associated with the method, some related implementation details of the apparatus are described in the above embodiments. For brevity, similar descriptions for this embodiment are not repeated in detail here.

Based on the present invention method (e.g. the method mentioned above) and the associated apparatus (e.g. the redundant storage system 100, the generic storage system 13, the cache storage system 113, the control circuits 14 and 114, etc.), when the aforementioned one-bit data error occurs in any of the SSDs/HDDs of a RAID device (e.g. the HDD RAID 16, the HDD RAID 116, and the SSD RAID 126 for the cache purpose of the HDD RAID 116) utilized by the file system due to bit rot or some kinds of hardware error, the one-bit data error can be detected and the data in the SSD(s)/HDD(s) can be corrected and restored. The one-bit data error means a single bit of the data is incorrect. More specifically, data is stored in the storage medium in the binary form. For example, the binary form of 5566 is 1010110111110. Suppose that there is an error such as the one-bit data error in the binary form of 5566, e.g. 1010110111110 being saved as 10*0*0110111110, in which the bit "*0*" printed with italic type can be taken as an example of the one-bit data error. When 10*0*0110111110 is interpreted back to the decimal form, the "10*0*0110111110" will become the number 4542, which is a total different number than 5566. In addition, the data may have been incorrectly written into the RAID device when some kinds of hardware errors occur. More specifically, the main components of an SSD are the controller and the flash memory for storing the data. If the controller malfunctions, the data cannot be written to the SSD correctly. The present invention method and the associated apparatus can correct the one-bit data error and enhance the overall performance of the redundant storage system.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for performing data recovery in a redundant storage system (100), wherein the redundant storage system (100) comprises a plurality of storage devices, the method **characterized by**:
determining a state of a cache block of a plurality of cache blocks, wherein the state is one of a plurality of states, wherein the plurality of storage devices comprises a set of Hard Disk Drives (118), hereinafter HDDs, and a set of Solid State Drives (128), hereinafter SSDs, an SSD Redundant Array of Independent Disk (126), hereinafter SSD RAID, of the redundant storage system (100) comprises the set of SSDs (128), and an HDD RAID (116) of the redundant storage system (100) comprises the set of HDDs (118), wherein the SSD RAID (126) is utilized as a cache system of the HDD RAID (116) and comprises the plurality of cache blocks, wherein the plurality of states comprises a dirty state in which the data is found in the cache block and the data in the cache block is not the same as that in a corresponding block of the HDD RAID (116), a non-dirty state in which the data is found in the cache block and the data in the cache block is the same as the data in the corresponding block of the HDD RAID (116), and an empty state in which the data is not stored in the cache block; and
when the state of the cache block is empty or non-dirty, performing a retry-read operation on the HDD RAID (116), and when the state of the cache block is dirty, performing a read-retry operation on the SSD RAID (126), to obtain a correct version of data within the redundant storage system (100).

2. The method of claim 1, wherein the redundant storage system (100) comprises a cache storage system (113), and the cache storage system (113) comprises the HDD RAID (116) and the SSD RAID (126); and the method further comprises:
managing the cache storage system (113) to serve a file system (12) of the redundant storage system (100), and receiving a retry-read command from the file system (12); and **characterized by**:
performing a plurality of preparation operations first, and then performing data recovery in response to the retry-read command to obtain the correct version of the data, wherein at least one portion of the preparation operations is related to the state of the cache block.

3. The method of claim 1, **Characterized in that** the method further comprises:
performing a plurality of preparation operations first, and then performing data recovery to obtain the correct version of the data, wherein the plurality of preparation operations comprises:
when the state of the cache block is the empty state, prohibiting the data from being replicated to any of the plurality of cache blocks.

4. The method of claim 1, **characterized in that** the method further comprises:
performing a plurality of preparation operations first, and then performing data recovery to obtain the correct version of the data, wherein the plurality of preparation operations comprises:
when the state of the cache block is not empty, determining whether the data in the cache block is the same as that in a corresponding block of the HDD RAID (116), wherein if the data in the cache block is the same as that in the corresponding block of the HDD RAID (116), the state of the cache block is a non-dirty state, otherwise, the state of the cache block is a dirty state; and
when the state of the cache block is the dirty state, temporarily prohibiting the cache block from being swapped.

5. The method of claim 1, **characterized in that** the method further comprises:
performing a plurality of preparation operations first, and then performing data recovery to obtain the correct version of the data, wherein the plurality of preparation operations comprises:
when the stale of the cache block is not empty, determining whether the data in the cache block is the same as that in a corresponding block of the HDD RAID (116), wherein if the data in the cache block is the same as that in the corresponding block of the HDD RAID (116), the state of the cache block is a non-dirty state, otherwise, the state of the cache block is a dirty state; and
when the state of the cache block is the non-dirty state, temporarily prohibiting the cache block from being swapped.

6. The method of claim 3 or 5, **characterized in that** the step of performing the retry-read operation on the HDD RAID (116) to obtain the correct version of the data within the redundant storage system (100) further comprises:
transmitting the retry-read command to the HDD RAID (116) to perform data recovery on the HDD RAID (116).

7. The method of claim 6, **characterized in that** the step of performing the retry-read operation on the HDD RAID (116) to obtain the correct version of the data within the redundant storage system (100) further comprises:
when the data recovery performed on the HDD RAID (116) is not successful, transmitting the retry-read command to the SSD RAID (126) to perform data recovery on the SSD RAID (126).

8. The method of claim 4, **characterized in that** the step of performing the retry-read operation on the SSD RAID (126) to obtain the correct version of the data within the redundant storage system (100) further comprises:
transmitting the retry-read command to the SSD RAID (126) to perform data recovery on the SSD RAID (126).

9. The method of claim 8, **characterized in that** the step of performing the retry-read operation on t the SSD RAID (126) to obtain the correct version of the data within the redundant storage system (100) further comprises:
when the data recovery performed on the SSD RAID (126) is not successful, transmitting the retry-read command to the HDD RAID (116) to perform data recovery on the HDD RAID (116).

10. The method of claim 1, **characterized in that** the method further comprises:
when the SSD RAID (126) starts synchronizing dirty blocks within the plurality of cache blocks, determining correctness of data of each dirty block of the dirty blocks before writing the data of the dirty block into the HDD RAID (116), wherein a state of the dirty block is a dirty state in which the data of the dirty block is found in the dirty block and the data of the dirty block is not the same as that in a corresponding block of the HDD RAID (116).

11. An apparatus for performing data recovery in a redundant storage system (100), the apparatus **characterized by**:
a control circuit, located in a specific layer of a plurality of layers in the redundant storage system (100) and coupled to a plurality of storage devices of the redundant storage system (100), wherein the control circuit is arranged to control an operation of the redundant storage system (100), and controlling the operation of the redundant storage system (100) comprises:
determining a state of a cache block of a plurality of cache blocks, wherein the state is one of a plurality of states, wherein the plurality of storage devices comprises a set of Hard Disk Drives (118), hereinafter HDDs, and a set of Solid State Drives (128), hereinafter SSDs, an SSD Redundant Array of Independent Disk, hereinafter RAID of the redundant storage system (100) comprises the set of SSDs (128), and an HDD RAID (116) of the redundant storage system (100) comprises the set of HDDs (118), wherein the SSD RAID (126) is utilized as a cache system of the HDD RAID (116) and comprises the plurality of cache blocks, wherein the plurality of states comprises a dirty state in which the data is found in the cache block and the data in the cache block is not the same as that in a corresponding block of the HDD RAID (116), a non-dirty state in which the data is found in the cache block and the data in the cache block is the same as the data in the corresponding block of the HDD RAID (116), and an empty state in which the data is not stored in the cache block; and
when the state of the cache block is empty or non-dirty, performing a retry-read operation on the HDD RAID (116), and when the state of the cache block is dirty, performing a read-retry operation on the SSD RAID (126), to obtain a correct version of data within the redundant storage system (100).

12. The apparatus of claim 11, wherein the redundant storage system (100) comprises a cache storage system (113), and the cache storage system (113) comprises the HDD RAID (116) and the SSD RAID (126); the control circuit manages the cache storage system (113) to serve a file system (12) of the redundant storage system (100), and receives a retry-read command from the file system (12); and **characterized by** the control circuit performs a plurality of preparation operations first, and then performs data recovery in response to the retry-read command to obtain the correct version of the data, wherein at least one portion of the preparation operations is related to the state of the cache block.

13. The apparatus of claim 12, **characterized in that** for the file system (12), the retry-read command is arranged to read a redundant data block corresponding to a block index from the cache storage system (113) to perform a retry-read operation.

14. The apparatus of claim 13, **characterized in that** the retry-read command is further transmitted or forwarded by the control circuit within the cache storage system (113) to perform the retry-read operation; and for the control circuit, the retry-read command is arranged to read the redundant data block from the HDD RAID (116) or the SSD RAID (126) to perform the retry-read operation.

## Patentansprüche

1. Verfahren zum Durchführen einer Datenwiederherstellung in einem redundanten Speichersystem (100), worin das redundante Speichersystem (100) mehrere Speichergeräte umfasst, wobei das Verfahren **gekennzeichnet ist durch**:
Bestimmen eines Status eines Cache-Blocks mehrerer Cache-Blöcke, worin der Status einer von mehreren Statusen ist, worin die mehreren Speichergeräte einen Satz an Festlaufwerken (118), nachstehend HDDs, umfasst und einen Satz an Solid-State-Laufwerken (128), nachstehend SSDs, worin ein SSD Redundant Array of Independent Disk (126), nachstehend SSD RAID, des redundanten Speichersystems (100) den Satz an SSDs (128) umfasst, und worin ein HDD RAID (116) des redundanten Speichersystems (100) den Satz an HDDs (118) umfasst, worin der SSD RAID (126) als ein Cache-System des HDD RAID (116) verwendet wird und die mehreren Cache-Blöcke umfasst, worin die mehreren Zustände umfassen, einen dirty Status, in dem die Daten in dem Cache-Block zu finden sind und die Daten in dem Cache-Block ungleich denen in einem entsprechenden Block des HDD RAID (116) sind, einen non-dirty Status, in dem die Daten in dem Cache-Block zu finden sind und die Daten in dem Cache-Block gleich den Daten in dem entsprechenden Block des HDD RAID (116) sind, und einen Leer-Status, in dem die Daten nicht in dem Cache-Block gespeichert sind; und
wenn der Status des Cache-Blocks leer oder non-dirty ist, Durchführen eines Lesewiederholungs-Betriebes an dem HDD RAID (116), und wenn der Status des Cache-Blocks dirty ist, Durchführen eines Lesewiederholungs-Betriebes an dem SSD RAID (126), um eine korrekte Version von Daten in dem redundanten Speichersystem (100) zu erhalten.

2. Verfahren nach Anspruch 1, worin das redundante Speichersystem (100) ein Cache-Speichersystem (113) umfasst, und worin das Cache-Speichersystem (113) den HDD RAID (116) und den SSD RAID (126) umfasst; und worin das Verfahren weiter umfasst:
Managen des Cache-Speichersystems (113) um einem Dateisystem (12) des redundanten Speichersystems (100) zu dienen, und Empfangen eines Lesewiederholungs-Befehls von dem Dateisystem (12); und **gekennzeichnet durch**:
Zuerst Durchführen mehrere Vorbereitungs-Vorgänge, und dann Durchführen einer Datenwiederherstellung in Antwort auf den Lesewiederholungs-Befehl um die korrekte Version der Daten zu erhalten, worin mindestens ein Teil der Vorbereitungs-Vorgänge mit dem Status des Cache-Blocks verbunden ist.

3. Verfahren nach Anspruch 1, **dadurch gekennzeichnet, dass** das Verfahren weiter umfasst:
Zuerst Durchführen mehrere Vorbereitungs-Vorgänge, und dann Durchführen einer Datenwiederherstellung um die korrekte Version der Daten zu erhalten, worin die mehreren Vorbereitungs-Vorgänge umfassen:
wenn der Status des Cache-Blocks der Leer-Status ist, Verhindern, dass die Daten in einen der mehreren Cache-Blöcke kopiert werden.

4. Verfahren nach Anspruch 1, **dadurch gekennzeichnet, dass** das Verfahren umfasst:
Zuerst Durchführen mehrere Vorbereitungs-Vorgänge, und dann Durchführen einer Datenwiederherstellung, um die korrekte Version der Daten zu erhalten, worin die mehreren Vorbereitungs-Vorgänge umfassen:
wenn der Status des Cache-Blocks nicht leer ist, Bestimmen ob die Daten in dem Cache-Block gleich denen in einem entsprechenden Block des HDD RAID (116) sind, worin wenn die Daten in dem Cache-Block gleich denen in dem entsprechenden Block des HDD RAID (116) sind, dann ist der Status des Cache-Blocks ein non-dirty Status, andernfalls, ist der Status des Cache-Blocks ein dirty Status; und
wenn der Status des Cache-Blocks der dirty Status ist, temporär Verhindern, dass der Cache-Block gewechselt wird.

5. Verfahren nach Anspruch 1, **dadurch gekennzeichnet, dass** das Verfahren umfasst:
Zuerst Durchführen mehrere Vorbereitungs-Vorgänge, und dann Durchführen einer Datenwiederherstellung um die korrekte Version der Daten zu erhalten, worin die mehreren Vorbereitungs-Vorgänge umfassen:
wenn der Status des Cache-Blocks nicht leer ist, Bestimmen ob die Daten in dem Cache-Block gleich denen in einem entsprechenden Block des HDD RAID (116) sind, worin wenn die Daten in dem Cache-Block gleich denen in dem entsprechenden Block des HDD RAID (116) sind, dann ist der Status des Cache-Blocks ein non-dirty Status, andernfalls, ist der Status des Cache-Blocks ein dirty Status; und
wenn der Status des Cache-Blocks der non-dirty Status ist, temporär Verhindern, dass der Cache-Block gewechselt wird.

6. Verfahren nach Anspruch 3 oder 5, **dadurch gekennzeichnet, dass** der Schritt des Durchführens des Lesewiederholungs-Betriebes an dem HDD RAID (116), um die korrekte Version der Daten in dem redundanten Speichersystem (100) zu erhalten, weiter umfasst:
Übermitteln des Lesewiederholungs-Befehls zu dem HDD RAID (116), um eine Datenwiederherstellung an dem HDD RAID (116) durchzuführen.

7. Verfahren nach Anspruch 6, **dadurch gekennzeichnet, dass** der Schritt des Durchführens des Lesewiederholungs-Betriebes an dem HDD RAID (116), um die korrekte Version der Daten in dem redundanten Speichersystem (100) zu erhalten weiter umfasst:
wenn die an dem HDD RAID (116) durchgeführte Datenwiederherstellung nicht erfolgreich ist, Übermitteln des Lesewiederholungs-Befehls zu dem SSD RAID (126) um eine Datenwiederherstellung an dem SSD RAID (126) durchzuführen.

8. Verfahren nach Anspruch 4, **dadurch gekennzeichnet, dass** der Schritt des Durchführens des Lesewiederholungs-Betriebes an dem SSD RAID (126), um die korrekte Version der Daten in dem redundanten Speichersystem (100) zu erhalten, weiter umfasst:
Übermitteln des Lesewiederholungs-Befehls zu dem SSD RAID (126), um eine Datenwiederherstellung an dem SSD RAID (126) durchzuführen.

9. Verfahren nach Anspruch 8, **dadurch gekennzeichnet, dass** der Schritt des Durchführens des Lesewiederholungs-Betriebes an dem SSD RAID (126), um die korrekte Version der Daten in dem redundanten Speichersystem (100) zu erhalten, weiter umfasst:
wenn die an dem SSD RAID (126) durchgeführte Datenwiederherstellung nicht erfolgreich ist, Übermitteln des Lesewiederholungs-Befehls zu dem HDD RAID (116), um eine Datenwiederherstellung an dem HDD RAID (116) durchzuführen.

10. Verfahren nach Anspruch 1, **dadurch gekennzeichnet, dass** das Verfahren umfasst:
wenn der SSD RAID (126) beginnt, dirty Blöcke in den mehreren Cache-Blöcken zu synchronisieren, Bestimmen der Korrektheit der Daten eines jeden dirty Blocks der dirty Blöcke vor dem Schreiben der Daten des dirty Blocks in den HDD RAID (116), worin ein Status des dirty Blocks ein dirty Status ist, in dem die Daten des dirty Blocks in dem dirty Block zu finden sind und die Daten des dirty Blocks nicht gleich denen eines entsprechenden Blocks des HDD RAID (116) ist.

11. Vorrichtung zum Durchführen einer Datenwiederherstellung in einem redundanten Speichersystem (100), worin die Vorrichtung **gekennzeichnet ist durch**:
einen Schaltkreis, der in einer bestimmten Schicht der mehreren Schichten in dem redundanten Speichersystem (100) angeordnet und mit mehreren Speichergeräte des redundanten Speichersystems (100) gekoppelt ist, worin der Schaltkreis vorgesehen ist, einen Betrieb des redundanten Speichersystems (100) zu steuern, und worin Steuern des Betriebs des redundanten Speichersystems (100) umfasst:
Bestimmen eines Status eines Cache-Blocks der mehreren Cache-Blöcke, worin der Status einer von mehreren Statusen ist, worin die mehreren Speichergeräte einen Satz an Festplatten-Laufwerken (118), nachstehend HDDs, umfassen, und einen Satz an Solid-State-Laufwerken (128), nachstehend SSDs, worin ein SSD Redundant Array of Independent Disk, nachstehend RAID des redundanten Speichersystems (100) den Satz an SSDs (128) umfasst, und worin ein HDD RAID (116) des redundanten Speichersystems (100) den Satz an HDDs (118) umfasst, worin der SSD RAID (126) als ein Cache-System des HDD RAID (116) verwendet wird und die mehreren Cache-Blöcke umfasst, worin die mehreren Zustände einen dirty Status umfassen, in dem die Daten in dem Cache-Block aufgefunden werden, worin die Daten in dem Cache-Block nicht gleich denen in einem entsprechenden Block des HDD RAID (116) sind, einen non-dirty Status, in dem die Daten in dem Cache-Block zu finden sind, worin die Daten in dem Cache-Block gleich den Daten in dem entsprechenden Block des HDD RAID (116) sind, und einen Leer-Status, in dem die Daten in dem Cache-Block nicht gespeichert sind; und
wenn der Status des Cache-Blocks leer oder non-dirty ist, Durchführen eines Lesewiederholungs-Betriebes an dem HDD RAID (116), und wenn der Status des Cache-Blocks dirty ist, Durchführen eines Lesewiederholungs-Betriebes an dem SSD RAID (126), um eine korrekte Version von Daten in dem redundanten Speichersystem (100) zu erhalten.

12. Vorrichtung nach Anspruch 11, worin das redundante Speichersystem (100) ein Cache-Speichersystem (113) umfasst, und worin das Cache-Speichersystem (113) den HDD RAID (116) und den SSD RAID (126) umfasst; worin der Schaltkreis das Cache-Speichersystem (113) managt, um einem Dateisystem (12) des redundanten Speichersystems (100) zu dienen, und einen Lesewiederholungs-Befehl von dem Dateisystem (12) empfängt; und **gekennzeichnet dadurch, dass** der Schaltkreis zuerst mehrere Vorbereitungs-Vorgänge umfasst, und dann eine Datenwiederherstellung in Antwort auf den Lesewiederholungs-Befehl durchführt, um die korrekte Version der Daten zu erhalten, worin mindestens ein Teil der Vorbereitungs-Vorgänge mit dem Status des Cache-Blocks verbunden ist.

13. Vorrichtung nach Anspruch 12, **dadurch gekennzeichnet, dass** bei dem Dateisystem (12), der Lesewiederholungs-Befehl vorgesehen ist, einen redundanten Daten-Block entsprechend einem Block-Index von dem Cache-Speichersystem (113) zu lesen, um einen Lesewiederholungs-Betrieb durchzuführen.

14. Vorrichtung nach Anspruch 13, **dadurch gekennzeichnet, dass** der Lesewiederholungs-Befehl weiter übertragen oder durch den Schaltkreis in dem Cache-Speichersystem (113) weitergegeben wird, um den Lesewiederholungs-Betrieb durchzuführen; und dass für den Schaltkreis der Lesewiederholungs-Befehl vorgesehen ist, den redundanten Datenblock von dem HDD RAID (116) oder dem SSD RAID (126) zu lesen, um den Lesewiederholungs-Betrieb durchzuführen.

## Revendications

1. Procédé pour réaliser une récupération de données dans un système de mémoire redondant (100), où le système de mémoire redondant (100) comprenant une pluralité de dispositifs de mémoire, le procédé étant **caractérisé par** :
la détermination d'un état d'un bloc de cache d'une pluralité de blocs de cache, où l'état est un état parmi une pluralité d'états, où la pluralité de dispositifs de mémoire comprend un ensemble de lecteurs de disque dur (118), ci-après HDD, et un ensemble de disques à circuits intégrés (128), ci-après SSD, un réseau redondant SSD de disque indépendant (126), ci-après SSD RAID, du système de mémoire redondant (100) comprend l'ensemble des SSD (128), et un HDD RAID (116) du système de mémoire redondant (100) comprend l'ensemble des HDD (118), où le SSD RAID (126) est utilisé en tant que système de cache du HDD RAID (116) et comprend la pluralité de blocs de cache, où la pluralité d'états comprend un état altéré dans lequel les données se trouvent dans le bloc de cache et les données dans le bloc de cache ne sont pas les mêmes que celles dans un bloc correspondant du HDD RAID (116), un état non altéré dans lequel les données se trouvent dans le bloc de cache et les données dans le bloc de cache sont les mêmes que les données dans le bloc correspondant du HDD RAID (116), et un état vide dans lequel les données ne sont pas stockées dans le bloc de cache ; et
lorsque l'état du bloc de cache est vide ou non altéré, la réalisation d'une opération de relance de lecture sur le HDD RAID (116), et lorsque l'état du bloc de cache est altéré, la réalisation d'une opération de relance de lecture sur le SSD RAID (126), pour obtenir une version correcte des données à l'intérieur du système de mémoire redondant (100).

2. Procédé selon la revendication 1, où le système de mémoire redondant (100) comprend un système de mémoire cache (113), et le système de mémoire cache (113) comprend le HDD RAID (116) et le SSD RAID (126) ; et le procédé comprend en outre :
la gestion du système de mémoire cache (113) pour servir un système de fichiers (12) du système de mémoire redondant (100), et recevant une commande de relance de lecture provenant du système de fichiers (12) ; et **caractérisé par** :
la réalisation d'une pluralité d'opérations de préparation en premier lieu, puis la réalisation d'une récupération de données en réponse à la commande de relance de lecture pour obtenir la version correcte des données, où au moins une partie des opérations de préparation est associée à l'état du bloc de cache.

3. Procédé selon la revendication 1, **caractérisé en ce que** le procédé comprend en outre :
la réalisation d'une pluralité d'opérations de préparation en premier lieu, puis la réalisation d'une récupération de données pour obtenir la version correcte des données, où la pluralité d'opérations de préparation comprend :
lorsque l'état du bloc de cache est l'état vide, le fait d'empêcher les données d'être répliquées vers l'un quelconque de la pluralité de blocs de cache.

4. Procédé selon la revendication 1, **caractérisé en ce que** le procédé comprend en outre :
la réalisation d'une pluralité d'opérations de préparation en premier lieu, puis la réalisation d'une récupération de données pour obtenir la version correcte des données, où la pluralité d'opérations de préparation comprend :
lorsque l'état du bloc de cache n'est pas vide, le fait de déterminer si les données dans le bloc de cache sont les mêmes que celles dans un bloc correspondant du HDD RAID (116), où, si les données dans le bloc de cache sont les mêmes que celles dans le bloc correspondant du HDD RAID (116), l'état du bloc de cache est un état non altéré, sinon, l'état du bloc de cache est un état altéré ; et
lorsque l'état du bloc de cache est l'état altéré, l'interdiction temporaire du bloc de cache d'être échangé.

5. Procédé selon la revendication 1, **caractérisé en ce que** le procédé comprend en outre :
la réalisation d'une pluralité d'opérations de préparation en premier lieu, puis la réalisation d'une récupération de données pour obtenir la version correcte des données, où la pluralité d'opérations de préparation comprend :
lorsque l'état du bloc de cache n'est pas vide, le fait de déterminer si les données dans le bloc de cache sont les mêmes que celles dans un bloc correspondant du HDD RAID (116), où, si les données dans le bloc de cache sont les mêmes que celles dans le bloc correspondant du HDD RAID (116), l'état du bloc de cache est un état non altéré, sinon, l'état du bloc de cache est un état altéré ; et
lorsque l'état du bloc de cache est l'état non altéré, l'interdiction temporaire du bloc de cache d'être échangé.

6. Procédé selon la revendication 3 ou 5, **caractérisé en ce que** l'étape de réalisation de l'opération de relance de lecture sur le HDD RAID (116) pour obtenir la version correcte des données à l'intérieur du système de mémoire redondant (100) comprend en outre :
la transmission de la commande de relance de lecture au HDD RAID (116) pour réaliser une récupération des données sur le HDD RAID (116).

7. Procédé selon la revendication 6, **caractérisé en ce que** l'étape de réalisation de l'opération de relance de lecture sur le HDD RAID (116) pour obtenir la version correcte des données à l'intérieur du système de mémoire redondant (100) comprend en outre :
lorsque la récupération de données réalisée sur le HDD RAID (116) n'a pas réussie, la transmission de la commande de relance de lecture au SSD RAID (126) pour réaliser une récupération de données sur le SSD RAID (126).

8. Procédé selon la revendication 4, **caractérisé en ce que** l'étape de réalisation de l'opération de relance de relecture sur le SSD RAID (126) pour obtenir la version correcte des données à l'intérieur du système de mémoire redondant (100) comprend en outre :
la transmission de la commande de relance de lecture au SSD RAID (126) pour réaliser une récupération de données sur le SSD RAID (126).

9. Procédé selon la revendication 8, **caractérisé en ce que** l'étape de réalisation de l'opération de relance de lecture sur le SSD RAID (126) pour obtenir une version correcte des données à l'intérieur du système de mémoire redondant (100) comprend en outre :
lorsque la récupération de données réalisée sur le SSD RAID (126) n'a pas réussi, la transmission de la commande de relance de lecture au HDD RAID (116) pour réaliser une récupération de données sur le HDD RAID (116).

10. Procédé selon la revendication 1, **caractérisé en ce que** le procédé comprend en outre :
lorsque le SSD RAID (126) commence la synchronisation de blocs altérés à l'intérieur de la pluralité de blocs de cache, la détermination de l'exactitude des données de chaque bloc altéré des blocs altérés avant l'écriture des données du bloc altéré dans le HDD RAID (116),
où un état du bloc altéré est un état altéré dans lequel les données du bloc altéré se trouvent dans le bloc altéré et les données du bloc altéré ne sont pas les mêmes que celles dans un bloc correspondant du HDD RAID (116).

11. Appareil pour réaliser une récupération de données dans un système de mémoire redondant (100), l'appareil étant **caractérisé par** :
un circuit de commande, situé dans une couche spécifique d'une pluralité de couches dans le système de mémoire redondant (100) et couplé à une pluralité de dispositifs de mémoire du système de mémoire redondant (100), où le circuit de commande est conçu pour commander une opération du système de mémoire redondant (100), et la commande du fonctionnement du système de mémoire redondant (100) comprend :
la détermination d'un état d'un bloc de cache d'une pluralité de blocs de cache, où l'état est un état parmi une pluralité d'états, où la pluralité de dispositifs de mémoire comprend un ensemble de lecteurs de disque dur (118), ci-après HDD, et un ensemble de disques à circuits intégrés (128), ci-après SSD, un réseau redondant SSD de disque indépendant, ci-après RAID du système de mémoire redondant (100) comprend l'ensemble des SSD (128), et un HDD RAID (116) du système de mémoire redondant (100) comprend l'ensemble des HDD (118), où le SSD RAID (126) est utilisé en tant que système de cache du HDD RAID (116) et comprend la pluralité de blocs de cache, où la pluralité d'états comprend un état altéré dans lequel les données se trouvent dans le bloc de cache et les données dans le bloc de cache ne sont pas les mêmes que celles dans un bloc correspondant du HDD RAID (116), un état non altéré dans lequel les données se trouvent dans le bloc de cache et les données dans le bloc de cache sont les mêmes que les données dans le bloc correspondant du HDD RAID (116), et un état vide dans lequel les données ne sont pas stockées dans le bloc de cache ; et
lorsque l'état du bloc de cache est vide ou non altéré, la réalisation d'une opération de relance de lecture sur le HDD RAID (116), et lorsque l'état du bloc de cache est altéré, la réalisation d'une opération de relance de lecture sur le SSD RAID (126), pour obtenir une version correcte de données à l'intérieur du système de mémoire redondant (100).

12. Appareil selon la revendication 11, où le système de mémoire redondant (100) comprend un système de mémoire cache (113), et le système de mémoire cache (113) comprend le HDD RAID (116) et le SSD RAID (126) ; le circuit de commande gère le système de mémoire cache (113) pour servir un système de fichiers (12) du système de mémoire redondant (100), et reçoit une commande de relance de lecture provenant du système de fichiers (12) ; et **caractérisé en ce que** le circuit de commande réalise une pluralité d'opérations de préparation en premier lieu, puis réalise une récupération de données en réponse à la commande de relance de lecture pour obtenir la version correcte des données, où au moins une partie des opérations de préparation est associée à l'état du bloc de cache.

13. Appareil selon la revendication 12, **caractérisé en ce que**, pour le système de fichiers (12), la commande de relance de lecture est conçue pour lire un bloc de données redondant correspondant à un indice de bloc à partir du système de mémoire cache (113) pour réaliser une opération de relance de lecture.

14. Appareil selon la revendication 13, **caractérisé en ce que** la commande de relance de lecture est en outre transmise ou transférée par le circuit de commande à l'intérieur du système de mémoire cache (113) pour réaliser l'opération de relance de lecture ; et pour le circuit de commande, la commande de relance de lecture est conçue pour lire le bloc de données redondant à partir du HDD RAID (116) ou du SSD RAID (126) pour réaliser l'opération de relance de lecture.
